# FASCICULE DE BREVET EUROPEEN

(11) **EP 0 895 846 B1**
(45) Date de publication et mention de la délivrance du brevet: **05.03.2003**
(21) Numéro de dépôt: 98401812.7
(22) Date de dépôt: 17.07.1998
(51) Int. Cl.: B29C 43/18, B29C 70/68, B29C 43/40

(54) **Procédé et moule destinés à l'habillage d'une pièce plastique par une feuille-décor découpée puis libérée.**
Verfahren und Form zum Herstellen eines bekleideten Kunstoffgegenstandes mit einer geschnittenen und entspannten Dekorfolie.
Method and mould for lining a plastics article with a cut and relieved decorative sheet.

(30) Priorité: 06.08.1997 FR 9710086
(43) Date de publication de la demande: 10.02.1999
(73) Titulaire: ALLIBERT INDUSTRIE, 92000 Nanterre (FR)
(72) Inventeur: Baudouin, Ivan, 75019 Paris (FR); Corvest, Gildas, Pouilly, 60790 Valdampierre (FR); Marcovecchio, Dominique, 92600 Asnieres-sur-Seine (FR)
(74) Mandataire: Lerner, François

(56) Documents cités:
- EP-A- 0 492 052
- EP-A- 0 543 066
- EP-A- 0 636 464
- EP-A- 0 724 942
- WO-A-96/03267
- DE-C- 4 337 697
- US-A- 3 184 096

## Description

L'invention concerne un procédé d'habillage par au moins une feuille-décor non rigide d'une partie d'une face d'une pièce-support en matière(s) plastique(s), dans un moule comprenant essentiellement une première et une deuxième parties réservant entre elles une cavité de moulage, pour obtenir une pièce finie comprenant un médaillon de décor, et un tel moule.

Il faut entendre par feuille non rigide, un matériau souple (PVC, tissu ou matériau non tissé,...) pouvant comporter une couche de mousse ou analogue, mais qui est déformable. La feuille pourra être formée uniquement dans le moule, au cours du procédé de moulage de l'ensemble de la pièce, ou avoir été déjà préformée préalablement afin qu'elle possède avant la mise en oeuvre du présent procédé une première forme proche de celle de la partie du moule avec laquelle elle va venir en contact.

L'invention concerne plus particulièrement la réalisation d'une pièce-finie comprenant un médaillon de décor ne couvrant qu'une partie de la face d'aspect. Les problèmes inhérents à ce type de réalisation consistent généralement à positionner correctement la feuille, à ne laisser apparaître sur la pièce finie qu'une partie déterminée de la feuille tout en permettant une cohésion satisfaisante entre la partie recouverte de la feuille d'aspect et la partie non recouverte.

Dans la suite, la partie visible de la feuille sur la pièce finie et appartenant à la face d'aspect sera dénommée médaillon. La partie de la pièce-support non revêtue par la feuille sera dite "non surmoulée" ou "non recouverte", tandis que la partie située "sous" le médaillon sera dite "surmoulée" ou "recouverte".

Le document EP-A-0 724 942 divulgue un procédé comprenant les étapes suivantes :
a) introduire la feuille dans la cavité de moulage,
b) fermer au moins partiellement le moule par rapprochement de ses deux parties,
c) préalablement ou postérieurement à l'étape b), introduire de la matière plastique (1) dans la cavité de moulage,
d) préalablement et/ou postérieurement aux étapes b) et/ou c), découper au moins une ouverture dans au moins une zone de la feuille à l'aide de moyens de découpe comprenant deux éléments mobiles relativement l'un à l'autre,
e) postérieurement à l'étape d), répartir la matière dans la cavité de moulage en la faisant passer à travers l'ouverture, pour obtenir ladite pièce-support localement revêtue dudit médaillon avec la feuille-décor traversant en périphérie la pièce-support,
f) refroidir la pièce,
g) ouvrir le moule et éjecter la pièce finie.

Toutefois, le procédé divulgué par EP-A-0 724 942 n'est pas pleinement satisfaisant. En effet, la cohésion entre la partie recouverte et la partie non recouverte risque de ne pas être suffisante pour conférer à la pièce finie des caractéristiques mécaniques satisfaisantes. En outre, les problèmes liés à l'effet de mèche ne sont guère résolus.

Nous précisons qu'il est communément dénommé "effet de mèche", un phénomène consistant en une propagation d'humidité par capillarité le long de la feuille, en particulier le long des fibres lorsque la feuille est réalisée à base de fibres.

Pour résoudre les problèmes précités, l'invention propose qu'entre les étapes d) et e), on réalise une étape h) où l'on provoque un déplacement relatif des éléments de découpe, pour induire un positionnement de l'ouverture à l'écart de l'un au moins de ces éléments, à l'intérieur de la cavité de moulage.

L'invention améliore l'ouverture effective à travers la feuille, puisqu'elle éloigne cette ouverture des éléments de découpe, lesquels emprisonnent généralement la feuille entre eux et obstruent l'ouverture. Les problèmes liés à l'effet de mèche et à la cohésion entre les parties surmoulées et non surmoulées seront alors largement résolus.

Cette solution est en particulier adaptée au cas où l'ouverture effective permettant le passage de la matière à travers la feuille est délicate à obtenir. Ceci est notamment le cas lorsque la matière plastique est présente à l'endroit ou à proximité de l'endroit où l'ouverture doit être réalisée, et ce avant que l'on réalise la découpe. En effet, dans ce cas une partie de la matière s'étant refroidie, celle-ci forme une couche de matière moins fluide, laquelle entoure la matière encore fluide et tend à empêcher son passage à travers la découpe.

Une caractéristique intéressante de l'invention améliorant l'efficacité de l'ouverture en tant que passage de matière plastique consiste en ce que :
- préalablement à l'étape h) on crée une tension sur la feuille, dans la zone de découpe et lors de l'étape c) on introduit de la matière plastique en regard de la feuille,
- lors de l'étape h), on libère au moins une partie de cette tension.

La création d'une tension préalablement à l'étape h) contribue à éviter la formation de plis sur la feuille, en particulier lors de l'introduction de matière plastique en regard de la feuille. La présence de matière plastique au contact de la feuille tend à réduire les possibilités de mouvements de celle-ci, de telle sorte que la libération d'une partie de la tension appliquée sur la feuille risque alors moins d'engendrer des plis sur la feuille. Ceci est d'autant plus vrai que la feuille est proportionnellement nappée par la matière plastique.

Une autre caractéristique de l'invention consiste en ce que :
- lors de l'étape d), on réalise l'ouverture en un premier endroit, au moins en partie en limite et/ou hors de la cavité de moulage, et
- lors de l'étape h), on obtient un déplacement de cette ouverture afin de la positionner en un deuxième endroit à l'intérieur de la cavité de moulage, à l'écart des limites de cette cavité de moulage.

Compte-tenu de la mobilité des éléments, les limites de la cavités évoluent au cours du procédé. Ainsi, on considérera qu'à un instant donné, un élément est à l'intérieur de la cavité de moulage, lorsqu'à cet instant, il n'est séparé de la matière plastique ou d'un moyen d'introduction de matière plastique par aucun obstacle physique.

La réalisation de la découpe est plus aisée en limite et/ou hors de la cavité de moulage et le déplacement de l'ouverture vers l'intérieur de cette cavité permet un passage satisfaisant de la matière à travers la feuille.

L'invention propose en outre que lors de l'étape h), on découpe la feuille de façon discontinue, de sorte qu'elle est retenue par l'intermédiaire d'une zone périphérique au moins jusqu'à l'étape f).

Cette solution permet de réaliser des passages à travers la feuille, tout en conservant la maîtrise de la tension de la feuille.

Selon une autre caractéristique de l'invention, la première partie du moule comprenant un premier et un deuxième élément, on réalise en outre une découpe continue de la feuille par écrasement de la feuille entre le premier et le deuxième élément.

Cette découpe évite une opération de reprise de pièce destinée à supprimer le surplus de feuille. L'écrasement permet de n'obtenir une séparation des deux parties de la feuille qu'après écartement des deux éléments. De plus, la feuille étant comprimée entre les deux éléments, elle réalise alors une étanchéité entre eux.

En outre, l'invention vise à améliorer les qualités d'aspect de la pièce finie, en évitant que la feuille ne soit dégradée au cours du procédé. Pour cela, l'invention propose que, la feuille étant en appui contre une surface d'appui de la deuxième partie du moule au moins lors de l'étape f) et cette surface d'appui présentant une concavité prononcée dans une zone déterminée, on réduise la distance séparant la première et la deuxième parties du moule dans cette zone déterminée.

Cette réduction locale de distance entraîne une réduction de la tension appliquée à la feuille, laquelle est particulièrement élevée dans cette zone. Elle réduit par conséquent le risque de déchirure de la feuille ou de passage inopiné de matière plastique à travers elle. En outre, elle ne réduit pas notablement les caractéristiques mécaniques de la pièce finie contrairement à une réduction globale d'épaisseur.

L'invention a également pour objet un moule pour réaliser une pièce comprenant une pièce-support en matière(s) plastique(s), recouverte sur essentiellement une face d'aspect par au moins une feuille-décor non rigide.

EP-A-0 724 942 décrit un moule pour réaliser une pièce comprenant une pièce-support en matière(s) plastique(s), recouverte sur une partie d'une face par au moins une feuille-décor non rigide, comprenant essentiellement deux parties réservant entre elles une cavité de moulage, et présentant au moins deux zones de découpe coopérant entre elles pour réaliser la découpe d'une zone de la feuille destinée à être disposée entre eux.

Pour résoudre les problèmes précités, l'invention propose que :
- l'une des parties du moule se divise en un premier (4b) et un deuxième (4c) éléments mobiles l'un par rapport à l'autre entre une première et une deuxième positions, ces éléments mobiles comprenant chacun au moins une zone de découpe (20, 22) coopérant avec celle de l'autre élément,
- dans la première et la deuxième positions une partie au moins de la zone de découpe du premier élément soit à l'écart de la zone de découpe du deuxième élément,
- dans la deuxième position, ladite partie soit à l'intérieur ou en limite de cette cavité de moulage,
- dans une position intermédiaire entre la première et la deuxième position, ladite partie soit sensiblement au contact de la zone de découpe du deuxième élément.

Afin d'améliorer encore l'efficacité du passage à travers la feuille, l'invention propose que le premier élément comprenne en outre, à proximité de sa zone de découpe, une zone de dégagement pour que lors du déplacement relatif des deux éléments de la position intermédiaire à la deuxième position, la zone de découpe du deuxième élément soit successivement sensiblement au contact de la zone de découpe du premier élément, puis en regard de la zone de dégagement de ce premier élément.

Cette zone de dégagement permet de libérer totalement la zone de découpe de la feuille, avec une longueur de libération relativement élevée en ne nécessitant que des déplacements modérés des éléments de découpe.

Afin de réduire les tensions appliquées à la feuille, l'invention propose que lorsque la cavité de moulage comprend une zone de concavité prononcée, le moule comprenne au moins une zone de striction dans cette zone de concavité prononcée.

Afin de réduire les effets de la striction sur les caractéristiques mécaniques de la pièce finie, l'invention propose que le moule comprenne une pluralité de zones de striction dans - ou à proximité de - la zone de concavité prononcée, ces zones de striction étant séparées les unes des autres par des zones sans striction ou du moins de striction moindre, de sorte que la pièce finie présente une striction discontinue dans la zone de concavité prononcée.

L'invention va apparaître encore plus clairement dans la description qui va suivre, faite en référence aux dessins annexés dans lesquels :
- la figure 1 montre en coupe un moule conforme à l'invention lors d'une première étape du procédé,
- la figure 2 montre en coupe le moule de la figure 1, lors d'une deuxième étape du procédé,
- la figure 3 montre en coupe le moule de la figure 1, lors d'une troisième étape du procédé,
- la figure 4 montre à échelle agrandie, le détail repéré IV à la figure 2, lors de la deuxième étape du procédé,
- la figure 5 montre à échelle également agrandie, le détail de la figure 4, lors d'une étape intermédiaire entre la deuxième et la troisième,
- la figure 6 montre à échelle également agrandie, le détail repéré VI à la figure 3, lors de la troisième étape du procédé,
- la figure 7 montre à échelle également agrandie, le détail de la figure 6, postérieurement à la troisième étape,
- la figure 8 est une vue en coupe suivant la ligne VIII-VIII de la figure 6,
- la figure 9 illustre à échelle agrandie, le détail repéré IV à la figure 2, d'une variante de moule,
- la figure 10 illustre à échelle également agrandie, le détail repéré VI à la figure 3, de cette variante de moule,
- la figure 11 est une vue en coupe suivant la ligne XI-XI de la figure 9.

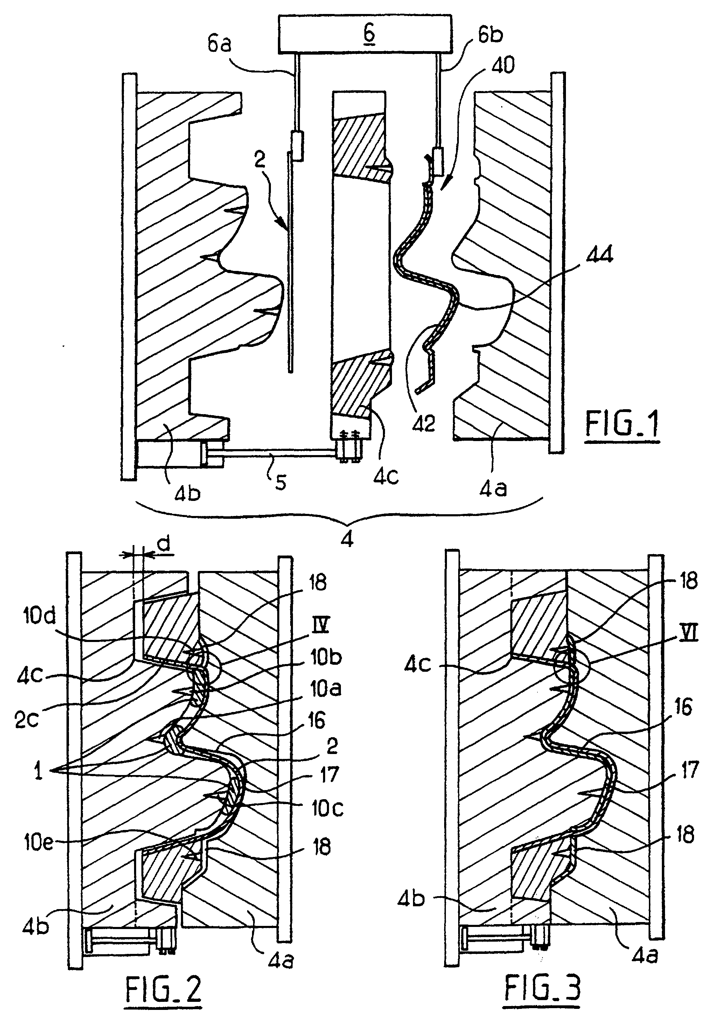

Sur les figures 1 à 8, on voit illustré un moule 4 comprenant une première partie mobile 4a et une deuxième partie constituée d'une partie fixe 4b et d'une lunette 4c (bloc en forme de cadre). Ici, la lunette 4c est liée à la partie fixe 4b par des vérins 5. La lunette pourrait toutefois en alternative être liée structurellement à la partie mobile 4a du moule par l'intermédiaire de vérins ou analogue.

La partie fixe 4b est constitué par un poinçon, tandis que la partie mobile 4a est constituée par une matrice.

La matrice 4a présente une surface d'appui 34 contre laquelle, une zone décor 2a d'une feuille 2 est destinée à venir en appui.

Cette feuille comprend en outre une zone périphérique 2c et une zone de raccordement 2b disposée entre la zone décor 2a et la zone périphérique 2c.

La lunette 4c comprend un mur de cisaillement 20 et un mur d'écrasement 30 coopérant respectivement avec un mur de cisaillement 22 et un mur d'écrasement 32 du poinçon 4b pour réaliser la découpe de la zone de raccordement de la feuille 2 disposée entre la lunette 4c et le poinçon 4b.

Le mur de cisaillement 20 s'étend entre un point extrême interne 20a qui est en limite de la cavité et un point extrême externe 20b. Le mur de cisaillement 22 s'étend entre un point extrême interne 22a qui est en limite de la cavité et un point extrême externe 22b.

Le poinçon 4b comprend plus précisément une succession de murs de cisaillement 22 séparés par des lumières 24, afin d'obtenir des ouvertures 2e séparées par des tronçons 2d de la feuille, matérialisant une découpe discontinue de cette feuille 2 dans sa zone de raccordement 2b. L'épaisseur l des lumières 24 est sensiblement égale ou légèrement inférieure à l'épaisseur de la feuille 2, afin que la matière 1 ne puisse pas ou presque pas passer par ces lumières 24. La matière 1 ne risque donc pas de créer une retenue de la feuille dans cette partie du moule.

Ce poinçon 4b comprend en outre une rainure périphérique 26 de libération de la feuille disposée entre le mur de cisaillement 22 et le mur d'écrasement 32.

Le moule présente une cavité 17 comportant un volume 16 et un volume extérieur 18 entourant le volume 16. Ces deux volumes sont séparés par la feuille 2 et en particulier sa zone de raccordement 2b. La cavité de moulage 17 est limitée par la matrice 4a, le poinçon 4b et la lunette 4c.

A la figure 1, le moule 4 est en position ouverte - la matrice 4a et le poinçon 4b sont largement distants l'un de l'autre - et la lunette 4c est sortie - non en appui sur le poinçon -.

La feuille 2 est mise en place entre le poinçon 4b et la lunette 4c par un premier bras 6a d'un robot 6.

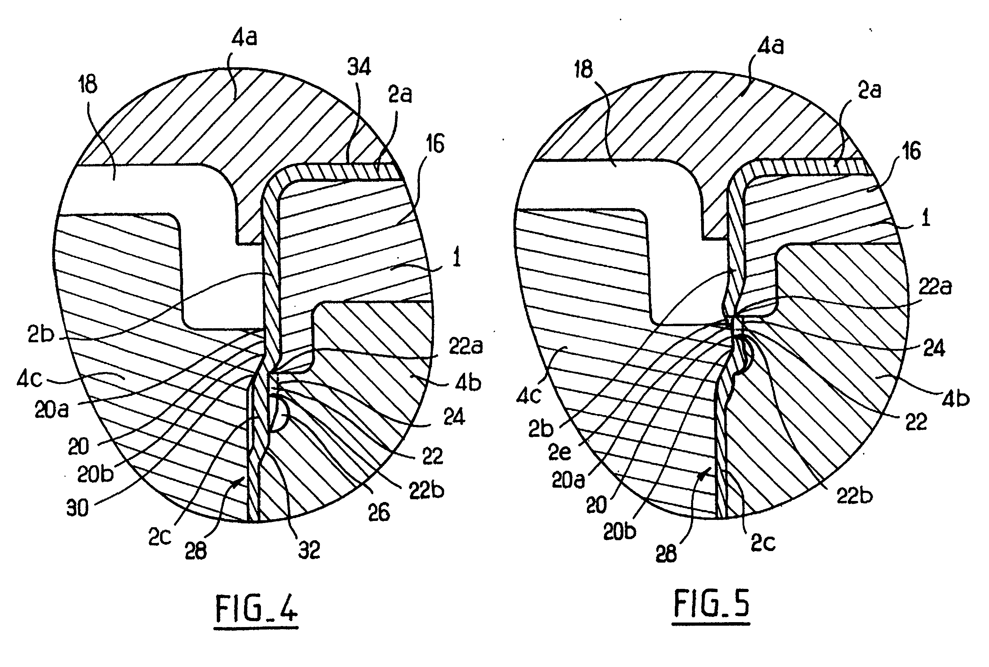

Aux figures 2 et 4, le moule 4 est partiellement fermé. Une distance d subsiste entre la lunette 4c et le poinçon 4b, tandis que la matrice 4a est en appui sur la lunette 4c.

Le point externe 20b et le point interne 22a sont distants l'un de l'autre, de sorte que les murs de cisaillement 20 et 22 sont à l'écart l'un de l'autre. La feuille est disposée entre ces deux murs et la découpe n'a pas encore commencé.

La zone périphérique 2c de la feuille 2 est maintenue par pincement entre la lunette 4c et le poinçon 4b, ce pincement forme moyens de retenue 28.

De la matière plastique 1, ici de la matière thermoplastique, destinée à servir de support à la pièce finie, est injectée depuis le poinçon 4b du moule dans le volume intérieur 16 situé sous la feuille 2, à l'aide de buses d'injection 10a, 10b, 10c. La matière plastique 1 vient napper localement la zone de raccordement 2b, jusqu'à l'endroit ou à proximité de l'endroit où les ouvertures 2e vont être réalisées.

Simultanément au remplissage du volume 16, le moule 4 est progressivement fermé par rapprochement du poinçon et de la matrice de telle manière que l'on obtienne une injection-compression de la matière 1.

Le rapprochement de la matrice 4a et du poinçon 4b provoque le rapprochement de la lunette 4c et du poinçon 4b, puisque celle-ci est en appui sur la matrice 4a.

Le rapprochement de la lunette 4c et du poinçon 4b, le rapprochement de la matrice 4a et du poinçon 4b, puis l'injection de matière plastique 1 provoquent une tension sur la feuille 2 qui est contrôlée à l'aide des moyens de retenue 28, en autorisant un glissement de la feuille entre eux au-delà d'un seuil de tension.

Tel qu'illustré à la figure 5, la fermeture de la lunette 4c provoque la découpe de la zone de raccordement 2b de la feuille par cisaillement entre les murs de cisaillement 20 et 30 de la lunette 4c et du poinçon 4b, lorsque ceux-ci sont en regard l'un de l'autre. Dans ce cas, le jeu entre les murs de cisaillement 20 et 22 est presque nul, afin d'obtenir une découpe satisfaisante de la feuille.

Ainsi, la découpe commence lorsque le point 20b est sensiblement au contact du point 22a et s'étend sur la hauteur où les murs sont en regard.

Toutefois, tant que le point interne 22a n'est pas sensiblement en regard du point interne 20a, les ouvertures 2e formées par découpe de la feuille 2 sont réalisées en majeure partie et quasiment exclusivement à l'extérieur de la cavité de moulage, de telle sorte que le passage de la matière ne peut s'effectuer qu'à travers une faible proportion de la section des ouvertures.

A partir du moment où les points internes 20a, 22a sont en regard l'un de l'autre, la poursuite du déplacement entre la matrice 4c et le poinçon 4b engendre une libération de la découpe sur une longueur sensiblement égale à la distance entre les points interne 20a et 22a. En effet, cette partie de la découpe est alors à l'écart du mur de cisaillement 20.

Les tronçons 2d permettent de conserver un maintien de la feuille 2 et en particulier de la zone décor 2a par retenue de la zone périphérique 2c entre la lunette 4c et le poinçon 4b.

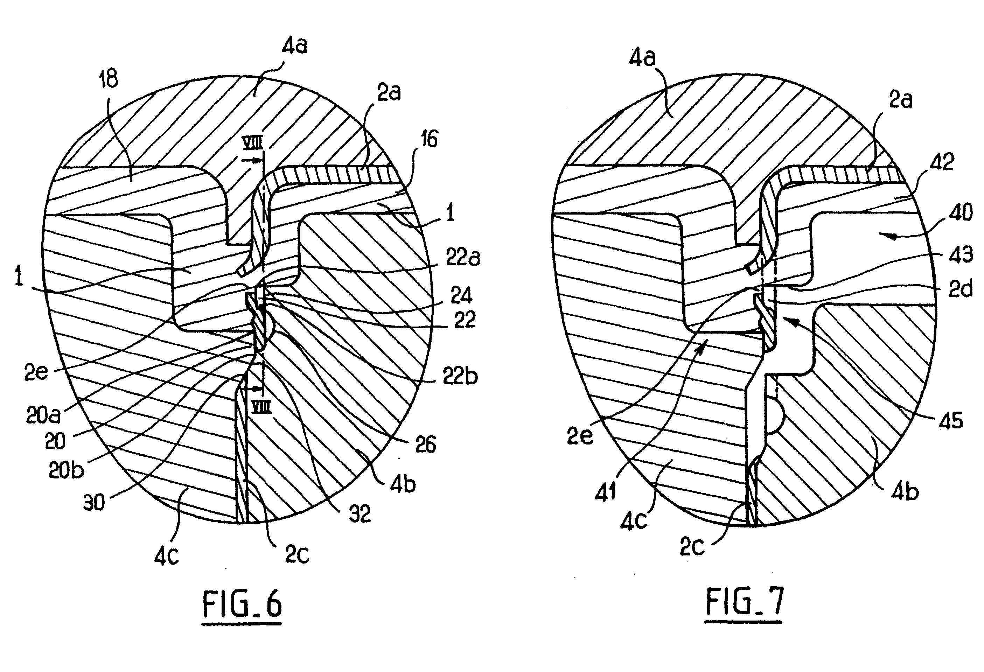

A la figure 6, en poursuivant la fermeture du moule 4, le mur de cisaillement 22 du poinçon est décalé par rapport à la lunette 4c et le mur de cisaillement 20 de la lunette 4c est sensiblement en regard de la rainure périphérique 26. La zone de raccordement 2b de la feuille 2 est ainsi complètement libérée des murs de cisaillement 20, 22 et donc d'une partie de sa tension. Cette rainure périphérique 26 définit ainsi une zone de dégagement.

Par conséquent, la feuille 2 n'est plus maintenue à proximité immédiate de ses ouvertures 2e. Ses ouvertures s'écartent alors des limites de la cavité de moulage 17 et en particulier du mur de cisaillement 22, sous l'action conjuguée de la pression d'injection de la matière plastique 1 et du relâchement d'une partie de sa tension.

Les ouvertures 2e sont ainsi entièrement à l'intérieur de la cavité de moulage. Elles remplissent alors parfaitement leur rôle consistant à permettre le passage de la matière plastique à travers toute leur section. Elles mettent ainsi en communication le volume 16 et le volume extérieur 18. L'écoulement de matière se poursuit alors, du volume 16 recouvert du médaillon vers le volume 18 où la face d'aspect de la pièce finie ne sera pas recouverte. L'injection de matière plastique dans le volume 18 est complétée par des buses 10d et 10e.

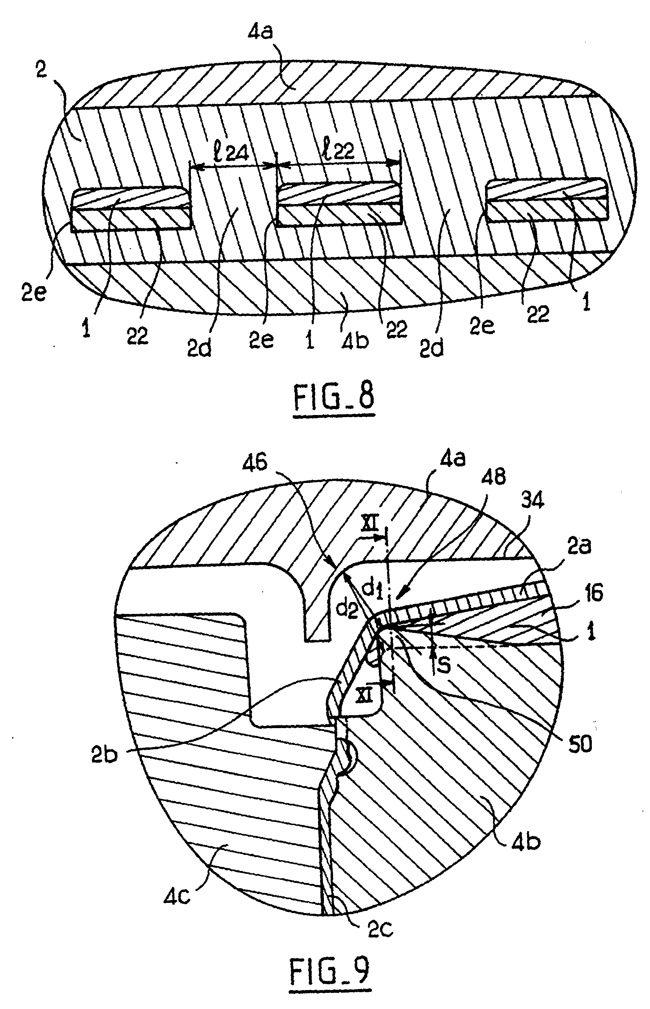

Tel qu'illustré à la figure 8, les ouvertures 2e sont formées par découpe surfacique de la feuille de section rectangulaire. Cette découpe en deux dimensions dégage une large section de passage contrairement aux entailles linéaires. Ceci est dû à l'alternance de murs de cisaillement 22 et de lumières 24 dont les longueurs respectivement sont comparables. Ces longueurs I₂₂ et I₂₄ correspondent respectivement à la longueur découpée et à la distance séparant deux découpes consécutives. En particulier le rapport des longueurs de ces deux éléments sera avantageusement inférieur à un facteur 10 (c'est-à-dire compris entre 1/10^{e} et 10) et de préférence inférieur à un facteur 2 (c'est-à-dire compris entre ½ et 2).

La pression d'injection de la matière 1 sera avantageusement plus élevée en fin de remplissage, notamment lorsque celle-ci ne sort plus que par les buses 10d et 10e situées dans le volume 18. Ainsi, on améliore les qualités d'aspect de la face non recouverte sans risquer de détériorer la zone décor 2a par une pression d'injection trop élevée.

Par ailleurs, la fermeture de la lunette 4c provoque le rapprochement du mur d'écrasement 30 de la lunette 4c et du mur d'écrasement 32 du poinçon 4b, lesquels écrasent la feuille 2 entre la zone de raccordement 2b et la zone périphérique 2c. Cet écrasement permet de retenir la zone de raccordement 4b de la feuille jusqu'à l'ouverture de la lunette 4c. La zone de raccordement 2b et la zone périphérique 2c ne seront séparées qu'après ouverture de la lunette 4c, tel qu'illustré à la figure 7.

En outre, la feuille écrasée entre les deux murs d'écrasement 30 et 32 forme un joint d'étanchéité périphérique vis-à-vis de la matière plastique, empêchant ainsi toute fuite de matière plastique entre la lunette 4c et le poinçon 4b.

Tel qu'illustré à la figure 7, la matière plastique refroidie forme un support 42 pour la pièce finie 40. Ce support présente du côté opposé à la zone décor 2a un décrochement 45 entre la partie recouverte et la partie non recouverte, sensiblement à l'endroit où la feuille traverse le support 42.

Du côté de la partie non recouverte par la feuille, les ouvertures 2e sont disposées au coeur du support 42 de sorte qu'elles sont masquées par une langue 41 de matière plastique. Cette langue 41 de matière se prolonge du côté de la partie recouverte par le décrochement 45, lequel s'étendant sensiblement jusqu'en regard des ouvertures 2e. Ces ouvertures sont disposées sensiblement au bord du support 42, dans le prolongement du bord 43 de ce support, de sorte que le passage de matière à travers les ouvertures 2e est susceptible d'apparaître de ce côté.

La pièce finie 40 est illustrée en figure 1 saisie par un deuxième bras 6b du robot 6. La pièce finie 40 est démoulée par écartement des deux parties du moule. Cette pièce 40 présente une face d'aspect 44 sur laquelle la zone décor de la feuille constitue localement un médaillon.

Les figures 9 à 11 présentent une variante de moule se distinguant essentiellement de celui des figures 4 à 8 en ce qu'il comprend une zone de striction 48. Cette zone de striction 48 se caractérise par un bossage 50 réalisé sur le poinçon et présentant une hauteur s.

La figure 9 illustre les contraintes subies par une feuille pour venir en appui contre la surface d'appui 34 de la matrice 4a dans une zone 46 présentant une forte concavité. Cette zone est proche des moyens de retenue 48, des moyens de découpe formés par les murs de cisaillement 20 et 22 et de la périphérie de la surface d'appui 34. A cette figure, la feuille 2 est maintenue par sa zone périphérique 2c et la matière plastique 1 est introduite dans le volume 16, sous la feuille 2.

Dans une zone où la matrice est concave, du fait de la tension qui lui est appliquée, la feuille tend en l'absence de matière plastique à se décoller de la surface d'appui 34. Ainsi, il lui faudra s'étirer pour s'appliquer contre la surface d'appui 34 dans la zone concave 46. Plus la concavité est prononcée, plus l'étirement sera élevé.

De plus, l'effort provoquant cet étirement est apporté par la pression de la matière plastique. Or, la présence de matière plastique contre la feuille réduit les possibilités d'étirement de cette feuille. Ainsi, la matière plastique se déplaçant vers la périphérie du volume 16, plus la zone de concavité est proche des moyens de retenue, plus la longueur de feuille subissant l'étirement est réduite et donc plus l'étirement sera concentré.

Cette zone concave 46 étant en outre proche des moyens de découpe formés par les murs de cisaillement 20 et 22, la concavité de la surface d'appui 34 risque de faire apparaître des défauts sur la face d'aspect de la pièce finie. Ces défauts peuvent être dus à un déplacement de la découpe vers la surface d'appui, à un déchirement s'étendant des découpes 2e à la surface d'appui, mais également à un passage de matière entre la zone d'aspect 2a de la feuille et cette surface d'appui 34. En effet, la découpe discontinue induit une tension différentielle sur la feuille entre les zones découpées 2e et les tronçons 2d et en cas de fort étirement, la zone décor 2a peut ne pas s'appliquer sur la totalité de la zone concave 46.

En l'absence du bossage 50, la distance séparant le poinçon 4b de la matrice 4a est égale à d₁ dans la zone 46. Elle correspond sensiblement au déplacement que devra effectuer la feuille 2, à l'épaisseur de cette feuille près. La présence du bossage 50 permet de réduire cette distance à d₂ qui est strictement inférieure à d₁. Les contraintes d'étirement de la feuille 2 sont ainsi réduites, ce qui permet de plaquer la zone décor 2a sur la surface d'appui sans risque, ou du moins un rique moindre de détérioration de cette feuille ou de passage de matière plastique entre les deux.

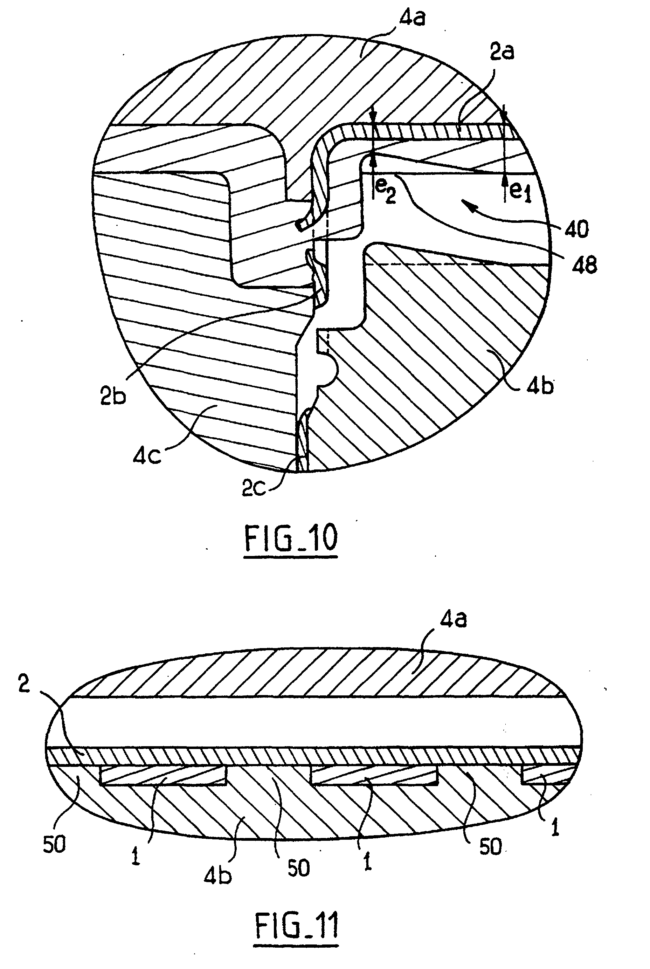

La pièce finie 40 illustrée à la figure 10 présentera ainsi une épaisseur sensiblement constante e₁ en dehors de la zone de striction et une épaisseur e₂ dans cette zone de striction 48. La différence entre e₁ et e₂ correspond à la hauteur s de la striction.

Plus précisément et tel qu'il apparaît plus particulièrement à la figure 11, le poinçon 4b comprend une succession de bossages 50 distants les uns des autres. Ainsi, la pièce finie présentera une striction discontinue.

La largeur et l'espacement entre les bossages consistent en un compromis entre la réduction de l'étirement appliqué à la feuille et la réduction des caractéristiques mécaniques de la pièce finie.

## Revendications

1. Procédé d'habillage par au moins une feuille-décor (2) non rigide d'une partie d'une face (44) d'une pièce-support (42) en matière(s) plastique(s), dans un moule (4) comprenant essentiellement une première (4b, 4c) et une deuxième (4a) parties réservant entre elles une cavité (17) de moulage, pour obtenir une pièce finie (40) comprenant un médaillon de décor, ledit procédé comprenant les étapes suivantes :
a) introduire la feuille dans la cavité de moulage,
b) fermer au moins partiellement le moule par rapprochement de ses deux parties,
c) préalablement ou postérieurement à l'étape b), introduire de la matière plastique (1) dans la cavité de moulage,
d) préalablement et/ou postérieurement aux étapes b) et/ou c), réaliser au moins une ouverture (2e) dans au moins une zone de la feuille à l'aide de moyens de découpe comprenant deux éléments mobiles relativement l'un à l'autre, en déplaçant lesdits éléments mobiles relativement l'un à l'autre pour découper la feuille disposée entre eux,
e) répartir la matière dans la cavité de moulage en la faisant passer à travers l'ouverture, pour obtenir ladite pièce-support localement revêtue dudit médaillon avec la feuille-décor (2) traversant la pièce-support,
f) refroidir la pièce,
g) ouvrir le moule et éjecter la pièce finie,
**caractérisé en ce qu'**entre les étapes d) et e), on réalise une étape h) où l'on provoque un déplacement relatif des éléments de découpe, pour induire un positionnement de l'ouverture à l'écart de l'un au moins de ces éléments, à l'intérieur de la cavité de moulage.

2. Procédé selon la revendication 1, **caractérisé en ce que** lors de l'étape d) on crée un mouvement de cisaillement entre les deux éléments mobiles et on poursuit le mouvement relatif de ces éléments mobiles lors de l'étape h).

3. Procédé selon la revendication 1 ou 2, **caractérisé en ce que** :
- préalablement à l'étape h) on crée une tension sur la feuille, dans la zone de découpe et on réalise l'étape c) en introduisant la matière plastique en regard de la feuille,
- lors de l'étape h), on libère au moins une partie de cette tension.

4. Procédé selon l'une quelconque des revendications précédentes, **caractérisé en ce que** :
- lors de l'étape d), on réalise l'ouverture en un premier endroit, au moins en partie en limite et/ou hors de la cavité de moulage, et
- lors de l'étape h), on obtient un déplacement de cette ouverture afin de la positionner en un deuxième endroit à l'intérieur de la cavité de moulage, à l'écart des limites de cette cavité de moulage.

5. Procédé selon l'une quelconque des revendications précédentes, **caractérisé en ce que** lors de l'étape h), on découpe la feuille de façon discontinue, de sorte qu'elle est retenue par une zone périphérique (2c) au moins jusqu'à l'étape f).

6. Procédé selon la revendication 5, **caractérisé en ce que** l'on découpe une pluralité d'ouvertures et le rapport de la longueur d'une ouverture et de la distance séparant deux ouvertures consécutives est inférieur à un facteur 10.

7. Procédé selon l'une quelconque des revendications précédentes, **caractérisé en ce que** l'on réalise en outre une découpe continue de la feuille.

8. Procédé selon la revendication 7, **caractérisé en ce que** la première partie du moule comprenant un premier (4b) et un deuxième (4c) élément, on réalise la découpe continue de la feuille par écrasement de la feuille entre le premier et le deuxième éléments.

9. Procédé selon l'une quelconque des revendications précédentes, **caractérisé en ce que** la feuille étant en appui contre une surface d'appui (34) de la deuxième partie (4a) du moule au moins lors de l'étape f) et cette surface d'appui présentant une concavité prononcée dans une zone déterminée (46), on réduit la distance (d₁) séparant la première et la deuxième parties du moule dans cette zone déterminée.

10. Procédé selon la revendication 9, **caractérisé en ce que** l'on réduit la distance (d₁) séparant la première et la deuxième parties du moule à proximité de la zone de découpe.

11. Moule (4) pour réaliser une pièce comprenant une pièce-support (42) en matière(s) plastique(s), recouverte sur une partie d'une face (44) par au moins une feuille-décor (2) non rigide, comprenant essentiellement deux parties réservant entre elles une cavité de moulage, et présentant au moins deux zones de découpe (20, 22) coopérant entre elles pour réaliser la découpe (2e) d'une zone de la feuille destinée à être disposée entre elles **caractérisé en ce que** :
- l'une des parties du moule se divise en un premier (4b) et un deuxième (4c) éléments mobiles l'un par rapport à l'autre entre une première et une deuxième positions, ces éléments mobiles comprenant chacun au moins une zone de découpe (20, 22) coopérant avec celle de l'autre élément,
- dans la première et la deuxième positions une partie au moins de la zone de découpe du premier élément est à l'écart de la zone de découpe du deuxième élément,
- dans la deuxième position, ladite partie est à l'intérieur de cette cavité de moulage,
- dans une position intermédiaire entre la première et la deuxième positions, ladite partie est sensiblement au contact de la zone de découpe du deuxième élément.

12. Moule selon la revendication 11, **caractérisé en ce que** l'un des éléments (4b) comprend en outre, à proximité de sa zone de découpe, une zone de dégagement (26) pour que lors du déplacement relatif des deux éléments de la position intermédiaire à la deuxième position, la zone de découpe du deuxième élément soit successivement sensiblement au contact de la zone de découpe du premier élément, puis en regard de la zone de dégagement de ce premier élément.

13. Moule selon la revendication 11 ou 12, **caractérisé en ce que** la cavité de moulage comprend au moins une zone de concavité prononcée (46), et que le moule comprend au moins une zone de striction (48) dans cette zone de concavité prononcée.

14. Moule selon la revendication 13, **caractérisé en ce qu'**il comprend une pluralité de zones de striction à (48) proximité de la zone de concavité prononcée, ces zones de striction étant séparées les unes des autres par des zones sans striction ou du moins de striction moindre, de sorte que la pièce finie présente une striction discontinue dans la zone de concavité prononcée.

15. Moule selon la revendication 13 ou 14, **caractérisé en ce que** la deuxième partie (4a) du moule comprend une surface d'appui (34) sur laquelle la feuille est destinée à venir en appui et la (les) zone(s) de striction (48) est (sont) disposée(s) sur la première partie du moule, à proximité de la périphérie de ladite surface d'appui.

## Patentansprüche

1. Verfahren zum Verkleiden eines Teiles einer Seite (44) eines Stützelementes (42) aus Kunststoffmaterial(ien) mit mindestens einer nicht steifen Dekorfolie (2) in einer Spritzform (4) mit im wesentlichen einem ersten (4b, 4c) und einem zweiten Teil (4a), die zwischen sich einen Formhohlraum (17) freihalten, um ein fertiges Teil (40) zu erhalten, das ein Dekormedaillon beinhaltet, wobei das Verfahren die folgenden Schritte aufweist:
a) Einführen der Folie in den Formhohlraum,
b) mindestens teilweises Schließen der Spritzform durch Annähern ihrer zwei Teile,
c) Einführen des Kunststoffmaterials (1) in den Formhohlraum vor oder nach dem Schritt b),
d) Realisieren mindestens einer Öffnung (2e) vor und/oder nach den Schritten b) und/oder c) in mindestens einem Bereich der Folie mit Hilfe von Schneidemitteln, die zwei zueinander bewegliche Elemente aufweisen, wobei die bezüglich einander beweglichen Elemente verschoben werden, um die zwischen ihnen angeordnete Folie zu schneiden,
e) Verteilen des Materials in dem Formhohlraum, indem man es quer durch die Öffnung hindurchgehen läßt, um das örtlich mit dem Medaillon verkleidete Stützelement zu erhalten, wobei die Dekorfolie (2) das Stützelement durchquert,
f) Abkühlen des Teils,
g) Öffnen der Spritzform und Ausstoßen des fertigen Teils,
**dadurch gekennzeichnet, daß** man zwischen den Schritten d) und e) einen Schritt h) ausführt, wo man ein relatives Verschieben der Schneideelemente hervorruft, um ein Positionieren der Öffnung im Abstand mindestens eines dieser Elemente im Inneren des Formhohlraums zu bewirken.

2. Verfahren nach Anspruch 1, **dadurch gekennzeichnet, daß** man während des Schrittes d) zwischen den zwei beweglichen Elementen eine Scherbewegung erzeugt und die relative Bewegung dieser beweglichen Elemente während des Schrittes h) fortsetzt.

3. Verfahren nach Anspruch 1 oder Anspruch 2, **dadurch gekennzeichnet, daß**:
- man vor dem Schritt h) auf der Folie in dem Schneidebereich eine Spannung erzeugt und man den Schritt c) durchführt, indem das Kunststoffmaterial gegenüber der Folie eingeführt wird,
- man während des Schrittes h) mindestens einen Teil dieser Spannung freigibt.

4. Verfahren nach einem der vorhergehenden Ansprüche, **dadurch gekennzeichnet, daß**:
- man während des Schrittes d) die Öffnung an einer ersten Stelle mindestens teilweise an der Grenze und/oder außerhalb des Formhohlraums realisiert und
- man während des Schrittes h) eine Verschiebung dieser Öffnung erreicht, um sie an einer zweiten Stelle im Inneren des Formhohlraums im Abstand der Grenzen dieses Formhohlraums zu positionieren.

5. Verfahren nach einem der vorhergehenden Ansprüche, **dadurch gekennzeichnet, daß** man während des Schrittes h) die Folie in unterbrochener Weise derart schneidet, daß sie durch einen Umfangsbereich (2c) mindestens bis zu dem Schritt f) zurückgehalten wird.

6. Verfahren nach Anspruch 5, **dadurch gekennzeichnet, daß** man eine Vielzahl von Öffnungen schneidet, wobei das Verhältnis sowohl der Länge einer Öffnung als auch des Abstandes, welcher zwei aufeinanderfolgende Öffnungen trennt, kleiner als ein Faktor 10 ist.

7. Verfahren nach einem der vorhergehenden Ansprüche, **dadurch gekennzeichnet, daß** man außerdem einen fortlaufenden Schnitt der Folie durchführt.

8. Verfahren nach Anspruch 7, **dadurch gekennzeichnet, daß** man, da bzw. wobei der erste Teil der Spritzform ein erstes (4b) und ein zweites Element (4c) aufweist, den fortlaufenden Schnitt der Folie durch Quetschen der Folie zwischen dem ersten und dem zweiten Element durchführt.

9. Verfahren nach einem der vorhergehenden Ansprüche, **dadurch gekennzeichnet, daß** man, während sich die Folie unter Abstützung gegen eine Stützoberfläche (34) des zweiten Teils (4a) der Spritzform mindestens während des Schrittes f) befindet und diese Stützoberfläche eine in einem abgegrenzten Bereich (46) eine stark ausgeprägte Vertiefung aufweist, den Abstand (d₁), welcher den ersten und den zweiten Teil der Spritzform trennt, in diesem abgegrenzten Bereich verringert.

10. Verfahren nach Anspruch 9, **dadurch gekennzeichnet, daß** man den Abstand (d₁), welcher den ersten und den zweiten Teil der Spritzform trennt, in der Nähe des Schneidebereiches verringert.

11. Spritzform (4) zur Realisierung eines Teils mit einem Stützelement (42) aus Kunststoffmaterial(ien), das auf einem Teil einer Seite (44) mit mindestens einer nicht steifen Dekorfolie (2) bedeckt ist, mit im wesentlichen zwei Teilen, die zwischen sich einen Formhohlraum freihalten und mit mindestens zwei Schneidebereichen (20, 22), die zusammenwirken, um den Schnitt (2e) eines Bereiches der Folie durchzuführen, die dazu bestimmt ist, zwischen ihnen angeordnet zu werden, **dadurch gekennzeichnet, daß**:
- sich einer der Teile der Spritzform in ein erstes Element (4b) und ein zweites Element (4c) teilt, die zueinander zwischen einer ersten und einer zweiten Position beweglich sind, wobei diese beweglichen Elemente jedes mindestens einen Schneidebereich (20, 22) aufweist, der mit dem des anderen Elementes zusammenwirkt,
- sich in der ersten und der zweiten Position ein Teil mindestens des Schneidebereiches des ersten Elementes im Abstand von dem Schneidebereich des zweiten Elementes befindet,
- sich in der zweiten Position der Teil im inneren dieses Formhohlraums befindet,
- in einer Zwischenposition zwischen der ersten und der zweiten Position der Teil im wesentlichen in Kontakt mit dem Schneidebereich des zweiten Elementes ist.

12. Spritzform nach Anspruch 11, **dadurch gekennzeichnet, daß** eines der Elemente (4b) ferner in der Nähe des Schneidebereiches einen eingriffsfreien Bereich (26) aufweist, damit während der relativen Verschiebung der zwei Elemente aus der Zwischenposition in die zweite Position der Schneidebereich des zweiten Elementes nacheinander im wesentlichen in Kontakt mit dem Schneidebereich des ersten Elementes, dann gegenüber dem eingriffsfreien Bereich dieses ersten Elementes ist.

13. Spritzform nach Anspruch 11 oder 12, **dadurch gekennzeichnet, daß** der Formhohlraum mindestens einen stark ausgeprägten Vertiefungsbereich (46) aufweist und daß die Spritzform mindestens einen Einschnürungsbereich (48) in diesem stark ausgeprägten Vertiefungsbereich aufweist.

14. Spritzform nach Anspruch 13, **dadurch gekennzeichnet, daß** sie eine Vielzahl von Einschnürungsbereichen (48) in der Nähe des stark ausgeprägten Vertiefungsbereiches aufweist, wobei diese Einschnürungsbereiche voneinander durch Bereiche ohne Einschnürung oder wenigstens von geringerer Einschnürung derart getrennt sind, daß das fertige Teil eine unterbrochene Einschnürung in dem stark ausgeprägten Vertiefungsbereich aufweist.

15. Spritzform nach Anspruch 13 oder 14, **dadurch gekennzeichnet, daß** der zweite Teil (4a) der Spritzform eine Stützoberfläche (34) aufweist, auf welche die Folie in Abstützung kommen soll, und daß der (die) Einschnürungsbereich(e) (48) auf dem ersten Teil der Spritzform in der Nähe des Umfanges der Stützoberfläche angeordnet ist (sind).

## Claims

1. A method for lining with at least one non-rigid decorative sheet (2) a portion of a face (44) of a support article (42) made of plastics material(s), in a mould (4) basically comprising a first portion (4b, 4c) and a second portion (4a) forming between them a moulding cavity (17), in order to obtain a finished article (40) comprising a decorative insert, said method comprising the following steps:
a) introducing the sheet into the moulding cavity,
b) closing the mould at least partially by bringing its two portions closer to each other,
c) prior to or subsequent to step b), introducing plastics material (1) into the moulding cavity,
d) prior to and/or subsequent to steps b) and/or c), making at least one opening (2e) in at least one area of the sheet with cutting means comprising two members movable relative to each other, by displacing said members movable relative to each other to cut the sheet disposed between them,
e) distributing the material in the moulding cavity by passing it through the opening, in order to obtain said support article lined locally with said insert with the decorative sheet (2) passing through the support article,
f) cooling the article,
g) opening the mould and ejecting the finished article,
**characterised in that** between steps d) and e), a step h) is carried out in which relative displacement of the cutting members is brought about in order to cause the opening to be positioned at a distance from at least one of the members, within the moulding cavity.

2. A method according to claim 1, **characterised in that** during step d) a shearing movement is produced between the two movable members and the relative movement of the movable members is continued during step h).

3. A method according to claim 1 or 2, **characterised in that**:
- prior to step h) a tension is produced on the sheet, in the cutting area and step c) is carried out by introducing the plastics material opposite the sheet,
- during step h), at least part of the tension is relieved.

4. A method according to any one of the preceding claims, **characterised in that**:
- during step d), the opening is made at a first location, at least partially at the limit of and/or outside the moulding cavity, and
- during step h), the opening is displaced in order to position it in a second location within the moulding cavity, at a distance from the limits of said moulding cavity.

5. A method according to any one of the preceding claims, **characterised in that** during step h), the sheet is cut discontinuously, so that it is retained by a peripheral area (2c) at least until step f).

6. A method according to claim 5, **characterised in that** a plurality of openings are cut and the ratio of the length of an opening and the distance separating two consecutive openings is less than a factor of 10.

7. A method according to any one of the preceding claims, **characterised in that** continuous cutting of the sheet is additionally carried out.

8. A method according to claim 7, **characterised in that**, as the first portion of the mould comprises a first member (4b) and a second member (4c), the continuous cutting of the sheet is carried out by crushing the sheet between the first and the second member.

9. A method according to any one of the preceding claims, **characterised in that**, as the sheet rests against a bearing surface (34) of the second portion (4a) of the mould at least during step f), and the bearing surface has a pronounced concavity in a specific area (46), the distance (d₁) separating the first and the second portion of the mould is reduced in this specific area.

10. A method according to claim 9, **characterised in that** the distance (d₁) separating the first and second portions of the mould is reduced in proximity to the cutting area.

11. A mould (4) for producing an article comprising a support article (42) made of plastics material(s), lined on a portion of a face (44) with at least one non-rigid decorative sheet (2), basically comprising two portions forming between them a moulding cavity, and having at least two cutting areas (20, 22) co-operating with each other to carry out the cutting (2e) of an area of the sheet intended to be disposed between them, **characterised in that**:
- one of the portions of the mould is divided into a first member (4b) and a second member (4c) movable relative to each other between a first and a second position, the movable members each comprising at least one cutting area (20, 22) co-operating with that of the other member,
- in the first and second positions at least a portion of the cutting area of the first member is at a distance from the cutting area of the second member,
- in the second position, said portion is within the moulding cavity,
- in an intermediate position between the first and second positions, said portion is substantially in contact with the cutting area of the second member.

12. A mould according to claim 11, **characterised in that** one of the members (4b) further comprises, in proximity to its cutting area, a disengagement area (26) so that during the relative displacement of the two members from the intermediate position to the second position, the cutting area of the second member is successively substantially in contact with the cutting area of the first member, then opposite the disengagement area of the first member.

13. A mould according to claim 11 or 12, **characterised in that** the moulding cavity comprises at least one area of pronounced concavity (46), and that the mould comprises at least one area of constriction (48) in this area of pronounced concavity.

14. A mould according to claim 13, **characterised in that** it comprises a plurality of areas of constriction (48) in proximity to the area of pronounced concavity, the areas of constriction being separated from one another by areas without constriction or at least with less constriction, such that the finished article has a discontinuous constriction in the area of pronounced concavity.

15. A mould according to claim 13 or 14, **characterised in that** the second portion (4a) of the mould comprises a bearing surface (34) on which the sheet is intended to come to rest and the area(s) of constriction (48) is/are disposed on the first portion of the mould, in proximity to the periphery of said bearing surface.
